# EUROPÄISCHE PATENTSCHRIFT

(11) **EP 0 678 964 B1**
(45) Veröffentlichungstag und Bekanntmachung des Hinweises auf die Patenterteilung: **30.07.1997**
(21) Anmeldenummer: 94810221.5
(22) Anmeldetag: 20.04.1994
(51) Int. Cl.: H02K 5/128, H02K 49/10

(54) **Trennelement und Vorrichtung mit Trennelement**
Dividing element and device with a dividing element
Elément de séparation et machine avec élément de séparation

(43) Veröffentlichungstag der Anmeldung: 25.10.1995
(73) Patentinhaber: SULZER INNOTEC AG, CH-8401 Winterthur (CH)
(72) Erfinder: Gysin, Hansjürg, CH-8400 Winterthur (CH)
(74) Vertreter: Heubeck, Bernhard

(56) Entgegenhaltungen:
- EP-A- 0 111 764
- EP-A- 0 255 723
- EP-A- 0 349 674

## Beschreibung

Die Erfindung betrifft ein Element zur Trennung von zwei Räumen, die von einem gemeinsamen instationären Magnetfeld durchflutet sind und eine Vorrichtung mit Trennelement.

Derartige Trennelemente sind bekannt (Siehe EP-A-0 349 674 und EP-A-0 111 764). Sie bestehen z.B. aus Faserverbundwerkstoffen mit Kohlenstoffasern und werden insbesondere aber nicht ausschliesslich in Form von Spalttöpfen in Spaltrohrmotoren angewendet. Die bekannten Spalttöpfe haben den Nachteil, dass aufgrund ihres Aufbaues eine Anwendung bei Motore mit geringer Gesamtleistung und Frequenzen bis 50 Hz beschränkt ist, um die Wirbelstromverluste in den Spalttöpfen in Grenzen zu halten.

Der Erfindung liegt die Aufgabe zugrunde, ein Trennelement zu verbessern, bei den hohen Leistungen und Frequenzen die Wirbelstromverluste im Trennelement deutlich reduziert werden, so dass eine Kühlung des Trennelementes möglich ist.

Die Aufgabe wird erfindungsgemäss mit den kennzeichnenden Merkmalen des Anspruches 1 gelöst.

Die mit der Erfindung erreichbaren Vorteile sind in den guten mechanischen, thermischen und elektrischen Eigenschaften zu sehen sowie der Abdichtung gegen gasförmige und flüssige Medien.

Eine Vorrichtung mit Trennelement ist durch die Merkmale des Anspruches 17 gekennzeichnet.

Der Vorteil der Vorrichtung ist darin zu sehen, dass der gesamte Wirkungsgrad erhöht werden kann.

Im folgenden wird die Erfindung anhand der beiliegenden Zeichnungen erläutert.

Es zeigen:
- Fig. 1: einen Abschnitt einer Ausführungsform eines erfindungsgemässen Trennelementes im Schnitt;
- Fig. 2: ein Spaltmotor mit einem Spalttopf im Halbschnitt und
- Fig. 3: eine Ausführungsform einer Halterung des Spalttopfes.

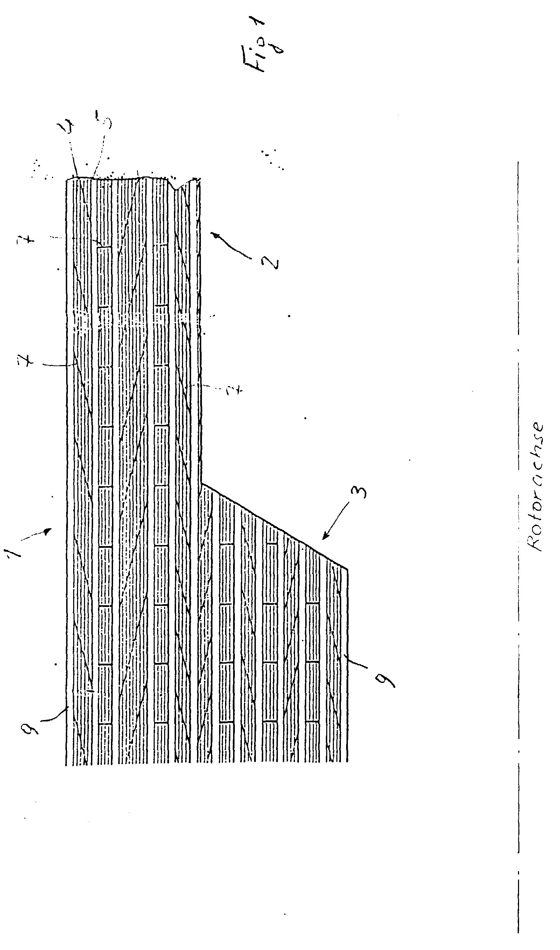

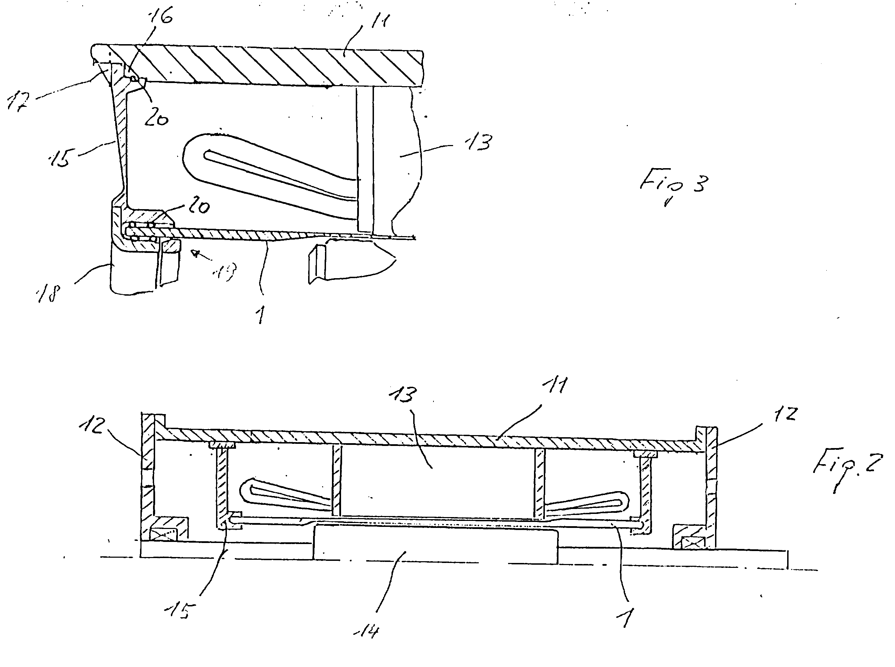

Die Fig. 1 zeigt einen Spalttopf für einen Spaltrohrmotor, der im Halbschnitt in Fig. 2 dargestellt ist. Der Spalttopf ist als hohlzylindrischer Körper 1 ausgebildet und hat einen Mittelabschnitt 2 mit dünner Wandstärke und zwei Endabschnitte 3 mit dickerer Wandstärke. Aus dieser Ausbildung der Endabschnitte resultiert eine höhere mechanische Festigkeit und eine einwandfreie Halterung in einem Motor.

Der Körper 1 ist aus mechanisch tragenden Lagen 4 und elektrisch isolierenden Schichten 5 gebildet. Jede Lage umfasst eine Anzahl von Bändern sogenannte pre-preg. Die Bänder bestehen aus einer Matrix aus Polymer und elektrisch leitenden Kohlenstoffasern, die in das Polymer eingelagert sind. Die Bänder werden durch bekannte Wickeltechniken zu einer Lage 4 zusammengefügt, derart, dass die Laufrichtung 7 der Fasern gleich gerichtet ist. Die einzelnen Lagen 4 werden getrennt durch eine Isolierschicht 5 so gruppiert, dass sich die Laufrichtungen 7 der Fasern benachbarten Lagen 4 kreuzen. Die Winkel der Faserlaufrichtung von benachbarten Lagen sind unter der Berücksichtigung der erforderlichen mechanischen Eigenschaften, insbesondere Festigkeit, der thermischen Eigenschaften, insbesondere Wärmeausdehnung und Wärmeableitung sowie der elektrischen Eigenschaften, insbesondere Leitfähigkeit ausgewählt.

Eine Schutzschicht 9 ist auf der Mantelfläche des Mittelabschnittes 2 und auf einen Abschnitt der Mantelfläche der Endabschnitte 3 aufgebracht, um einerseits den Körper 1 vor Beschädigung zu schützen und andererseits den Körper 1 zu befestigen. Die Endabschnitte 3 sind im Randbereich mit einer Auflage aus mit Keramik beschichtetem Stahl versehen.

Wie die Fig. 2 und 3 zeigen, enthält der Spaltrohrmotor ein Gehäuse 11, zwei Lagerschilde 12, einen Stator 13, der mit an sich bekannten Mitteln im Gehäuse gehalten ist, einen Rotor 14, der in den Lagerschilden 12 gelagert ist und den vorstehend beschriebenen Spalttopf 1, der mit seinem Mittelabschnitt zwischen dem Stator 13 und dem Rotor 14 angeordnet ist. Hierzu sind scheibenförmige Halter 15 vorgesehen, die einerseits am Gehäuse 11 befestigt sind und andererseits die Endabschnitte 3 des Spalttopfes 1 im Randbereich umfassen, so dass der Gehäuseinnenraum in zwei getrennte Räume aufgeteilt ist.

Wie Fig. 3 zeigt, ist im Gehäuse 11 eine Schulter 16 ausgebildet, an welcher der Halter anliegt und durch ein nicht näher dargestelltes Mittel 17 befestigt ist. Die Halterung des Randbereiches wird mit einer Klemmwirkung erreicht. Hierzu ist ein flanschartiger Ring 18, der z.B. am Halter 15 befestigt ist und eine Keilverbindung 19 bestehend aus zwei Ringen vorgesehen. Die Verbindung zwischen Halter 15 und Gehäuse 11 bzw. Spaltrohr 1 ist mittels Dichtungsorganen 20, z.B. O-Ringe abgedichtet. Dadurch werden im Spaltrohrmotor zwei Hohlräume gebildet, die gegenüber Gas und Flüssigkeit absolut dicht sind.

Das Trennelement besteht aus Faserverbundwerkstoff mit mehreren Lagen 4 und Isolierschichten 5, die zwischen den Lagen angeordnet sind. Die Lagen 4 sind so angeordnet, dass die Laufrichtung der Fasern benachbarter Lagen unter einem Winkel einander kreuzen, der frei wählbar ist. Durch die Isolierschicht 5 werden die Wirbelstromverluste in vorteilhafter Weise reduziert. Das Trennelement wird in einem Spaltrohrmotor angewendet, um einen Stoffaustausch zwischen Stator und Rotor zu verhindern. Dadurch wird eine Motorkonstruktion mit ausgezeichneten Kenndaten ermöglicht, in dem ein statisches Dichtelement den Statorraum von den Umgebungsmedien im Rotorraum trennt.

## Patentansprüche

1. Element zur Trennung von zwei Räumen, die von einem gemeinsamen instationären Magnetfeld durchflutet sind, gekennzeichnet durch einen Körper (1) enthaltend mindestens zwei Lagen (4) aus einer Matrix mit einer Verstärkung aus Fasern, die gleichgerichtet und elektrisch leitend sind und eine Isolierschicht (5), die zwischen den Lagen angeordnet ist, um die Wirbelstromverluste in einem instationären Magnetfeld zu reduzieren, wobei die Lagen (4) so gruppiert sind, dass die Laufrichtung (7) der Fasern benachbarter Lagen einander kreuzen, um die strukturellen Eigenschaften zu verbessern.

2. Element nach Anspruch 1, dadurch gekennzeichnet, dass die Isolierschicht (5) ein unverstärkter Werkstoff ist.

3. Element nach Anspruch 1 oder 2, dadurch gekennzeichnet, dass die Matrix der Lagen (4) und der Isolierschicht (5) aus dem gleichen oder unterschiedlichem Werkstoff besteht.

4. Element nach einem der Ansprüche 1 bis 3, dadurch gekennzeichnet, dass die Matrix der Lagen (4) aus Polymer oder Keramik besteht.

5. Element nach Anspruch 1, dadurch gekennzeichnet, dass der Kreuzungswinkel der Laufrichtung (7) frei wählbar ist.

6. Element nach einem der Ansprüche 1 bis 3, dadurch gekennzeichnet, dass die Lagen (4) eine unterschiedliche Dicke aufweisen.

7. Element nach einem der Ansprüche 1 bis 6, dadurch gekennzeichnet, dass der Körper (1) plattenförmig ausgebildet ist.

8. Element nach einem der Ansprüche 1 bis 6, dadurch gekennzeichnet, dass der Körper (1) ein Hohlkörper mit gleicher oder unterschiedlicher Aussen- und Innenquerschnittsform ist.

9. Element nach Anspruch 7, dadurch gekennzeichnet, dass der Körper ein Spalttopf (1) ist, der eine runde Querschnittsform aufweist.

10. Element nach Anspruch 8, dadurch gekennzeichnet, dass der Körper (1) eine polygonale Querschnittsform aufweist.

11. Element nach einem der Ansprüche 8 bis 10, dadurch gekennzeichnet, dass der Körper (1) mindestens einen Abschnitt mit grösserer Dicke aufweist.

12. Element nach Anspruch 1, dadurch gekennzeichnet, dass die Isolierschicht (5) eine Verstärkung aus Fasern oder Partikeln aufweist, die elektrisch nicht leitend sind.

13. Element nach Anspruch 12, dadurch gekennzeichnet, dass die Fasern aus einem Material ausgewählt aus der Gruppe Glas, Aramid bestehen.

14. Element nach Anspruch 1, dadurch gekennzeichnet, dass die Fasern aus Metall oder Nichtmetall bestehen.

15. Element nach Anspruch 14, dadurch gekennzeichnet, dass die Fasern aus Kohlenstoffasern bestehen.

16. Element nach einem der Ansprüche 8 bis 10, dadurch gekennzeichnet, dass eine Schutzschicht (9) vorgesehen ist, um den Körper (1) gegen mechanische Einwirkung zu schützen und gegen den Stator elektrisch zu isolieren.

17. Vorrichtung, insbesondere Spaltrohrmotor mit einem Gehäuse (11), einem Stator (13), der im Gehäuse (11) befestigt ist, einem Rotor (14), der in Lagerschilden (12) gelagert ist und mit einem den Rotor (14) umschliessenden Trennelement (1) nach einem der Ansprüche 1 bis 16, gekennzeichnet durch scheibenförmige Halter (15), die einerseits am Gehäuse (11) befestigt sind und andererseits das Trennelement (1) an den Endabschnitten (3) umfassen, um das Gehäuseinnere in zwei getrennte Räume aufzuteilen.

18. Vorrichtung nach Anspruch 17, dadurch gekennzeichnet, dass Dichtungsorgane (20) an den Verbindungsstellen zwischen Halter (15) und Trennelement (1) bzw. Gehäuse (11) vorgesehen sind, um jeglichen Stoffaustausch zwischen den Räumen zu verhindern.

19. Vorrichtung nach einem der Ansprüche 17 oder 18, dadurch gekennzeichnet, dass die Halter (15) aus elastischem Material bestehen.

## Claims

1. An element for the separation of two spaces, through which a common non-stationary magnetic field flows,
**characterised by** a body (1) containing at least two layers (4) of a matrix reinforced by fibres which lie in the same direction and are electrically conductive, and an insulating lamination (5), which is disposed between the layers in order to reduce eddy-current losses in a non-stationary magnetic field, wherein the layers (4) are so grouped that the directions (7) in which the fibres of adjacent layers lie cross one another in order to improve the structural properties.

2. An element according to Claim 1,
**characterised in that** the insulating lamination (5) is a non-reinforced material.

3. An element according to Claim 1 or 2,
**characterised in that** the matrix of the layers (4) and of the insulating lamination (5) is made from the same or a different material.

4. An element according to one of Claims 1 to 3,
**characterised in that** the matrix of the layers (4) is made from a polymer or ceramic material.

5. An element according to Claim 1,
**characterised in that** the angle of intersection of the direction (7) can be freely selected.

6. An element according to one of Claims 1 to 3,
**characterised in that** the layers (4) have different thicknesses.

7. An element according to one of Claims 1 to 6,
**characterised in that** the body (1) is plate-shaped.

8. An element according to one of Claims 1 to 6,
**characterised in that** the body (1) is a hollow body whose outer and inner cross-sectional shape is the same or different.

9. An element according to Claim 7,
**characterised in that** the body is a can (1), which has a round cross-sectional shape.

10. An element according to Claim 8,
**characterised in that** the body (1) has a polygonal cross-sectional shape.

11. An element according to one of Claims 8 to 10,
**characterised in that** the body (1) has at least one portion of greater thickness.

12. An element according to Claim 1,
**characterised in that** the insulating lamination (5) comprises a reinforcement of fibres or particles which are electrically non-conductive.

13. An element according to Claim 12,
**characterised in that** the fibres are made of a material selected from a group consisting of glass and aramid.

14. An element according to Claim 1,
**characterised in that** the fibres are made of metal or non-metal.

15. An element according to Claim 14,
**characterised in that** the fibres are made from carbon fibres.

16. An element according to one of Claims 8 to 10,
**characterised in that** a protective layer (9) is provided to protect the body (1) against mechanical influences and to insulate it electrically from the stator.

17. A device, particularly a canned motor having an enclosure (11), a stator (13) fixed in the enclosure (11), a rotor (14) mounted in the end shields (12) and having a separating element (1) surrounding the rotor (14) according to one of Claims 1 to 16,
characterised by plate-shaped holders (15) which are on the one hand fixed to the enclosure (11) and on the other hand surround the separating element (1) at the end portions (3) to divide the interior of the enclosure into two separate spaces.

18. A device according to Claim 17,
**characterised in that** sealing elements (20) are provided at the points of connection between the holder (15) and the separating element (1) or the enclosure (11) to prevent any exchange of material between the spaces.

19. A device according to one of Claims 17 or 18,
**characterised in that** the holders (15) are made from elastic material.

## Revendications

1. Elément de séparation de deux enceintes traversées par un champ magnétique instationnaire commun, caractérisé par un corps (1) contenant au moins deux couches (4) en une matrice renforcée par des fibres qui sont orientées dans le même sens et qui sont électriquement conductrices et une couche isolante (5) qui est disposée entre les couches pour diminuer les pertes associées au courant parasite dans un champ magnétique instationnaire, les couches (4) étant groupées de façon que la direction d'extension (7) des fibres de couches avoisinantes se croisent afin d'améliorer les caractéristiques structurelles.

2. Elément selon la revendication 1, caractérisé en ce que la couche isolante (5) est un matériau non renforcé.

3. Elément selon la revendication 1 ou 2, caractérisé en ce que la matrice des couches (4) et la couche isolante (5) sont constituées du même matériau ou de matériaux différents.

4. Elément selon l'une des revendications 1 à 3, caractérisé en ce que les matrices des couches (4) sont constituées de polymère ou de céramique.

5. Elément selon la revendication 1, caractérisé en ce que l'angle de croisement de la direction d'extension (7) peut être choisi librement.

6. Elément selon l'une des revendications 1 à 3, caractérisé en ce que les couches (4) ont une épaisseur différente.

7. Elément selon l'une des revendications 1 à 6, caractérisé en ce que le corps (1) est réalisé en forme de plaque.

8. Elément selon l'une des revendications 1 à 6, caractérisé en ce que le corps (1) est un corps creux qui a une forme en section transversale extérieure et intérieure identique ou différente.

9. Elément selon la revendication 7, caractérisé en ce que le corps est un pot d'entrefer (1) qui a une forme ronde en section transversale.

10. Elément selon la revendication 8, caractérisé en ce que le corps (1) a une forme polygonale en section transversale.

11. Elément selon l'une des revendications 8 à 10, caractérisé en ce que le corps (1) présente au moins un tronçon d'une plus grande épaisseur.

12. Elément selon la revendication 1, caractérisé en ce que la couche isolante (5) présente un renforcement en fibres ou en particules qui ne sont pas conductrices électriquement.

13. Elément selon la revendication 12, caractérisé en ce que les fibres sont constituées d'un matériau choisi dans le groupe de verre et d'aramide.

14. Elément selon la revendication 1, caractérisé en ce que les fibres sont réalisées en métal ou en non-métal.

15. Elément selon la revendication 14, caractérisé en ce que les fibres sont constituées de fibres de carbone.

16. Elément selon l'une des revendications 8 à 10, caractérisé en ce qu'il est prévu une couche protectrice (9) pour protéger le corps (1) des influences mécaniques et pour l'isoler électriquement du stator.

17. Dispositif, notamment moteur à gaine avec un carter (11), un stator (13) qui est fixé dans le carter (11), un rotor (14) qui est logé dans des flasques (12) et avec un élément de séparation (1) renfermant le rotor (14) selon l'une des revendications 1 à 16, caractérisé par des dispositifs de retenue (15) en forme de disque qui sont fixés d'une part au boîtier (11) et qui entourent d'autre part l'élément de séparation (1) aux tronçons d'extrémité (3) pour diviser l'intérieur du carter en deux enceintes séparées.

18. Dispositif selon la revendication 17, caractérisé en ce que des organes d'étanchéité (20) sont prévus aux endroits de liaison entre le dispositif de retenue (15) et l'élément de séparation (1), respectivement le carter (11) pour empêcher tout échange de matière entre les enceintes.

19. Dispositif selon l'une des revendications 17 ou 18, caractérisé en ce que les dispositifs de retenue (15) sont réalisés en une matière élastique.
